# EUROPEAN PATENT APPLICATION

(11) **EP 3 905 179 A1**
(43) Date of publication of application: **03.11.2021**
(21) Application number: 19904521.2
(22) Date of filing: 18.12.2019
(51) Int. Cl.: G06Q 30/06, G06N 3/04

(54) **PRODUCT RECOMMENDATION METHOD, PRODUCT RECOMMENDATION SYSTEM AND STORAGE MEDIUM**

(30) Priority: 29.12.2018 CN 201811654674
(71) Applicant: Shenzhen TCL New Technology Co., Ltd, Shenzhen, Guangdong 518052 (CN)
(72) Inventor: XU, Yongze, Shenzhen, Guangdong 518052 (CN); LAI, Cheungming, Shenzhen, Guangdong 518052 (CN)
(74) Representative: Petraz, Gilberto Luigi
(86) International application number: PCT/CN2019/126386
(87) International publication number: WO 2020/135189

(57) **Abstract**

A product recommendation method, a product recommendation system and a storage medium, the method comprising: according to the historical scores from a plurality users for a plurality of products of the same type, acquiring the score of first attribute content of the products (S 10); according to the score of the first attribute content and second attribute content, obtaining a predicted score from a user for a second attribute of a predicted product (S20); by using the historical scores of the plurality of products as the input of a collaborative filtering system, acquiring a collaboratively predicted score of the predicted product (S30); acquiring a predicted score proportion of the second attribute and a collaboratively predicted score proportion (S40); according to the predicted score of the second attribute, the predicted score proportion of the second attribute, the collaboratively predicted score and the collaboratively predicted score proportion, calculating the score of the predicted product corresponding to the plurality of users (S50); and recommending the product to the user according to the score of the predicted product (S60). The described method may increase the accuracy of a production recommendation method and improve user experience.

## Description

### CROSS REFERENCE TO RELATED APPLICATIONS

The present disclosure claims the benefits of: Chinese Application No. 201811654674.8 and entitled "PRODUCT RECOMMENDATION METHOD, PRODUCT RECOMMENDATION SYSTEM AND STORAGE MEDIUM", which is filed on December 29, 2019, and the entire disclosure of which is hereby incorporated by reference.

### TECHNICAL FIELD

The present disclosure relates to the field of communications technology, in particular to a product recommendation method, a product recommendation device and a storage medium.

### BACKGROUND

Websites like Amazon, Netflix, and Spotify will use recommendation systems to recommend products to users. Personalized recommendation systems can bring considerable convenience to users when searching for products, thereby enhancing user experience. Personalized recommendation usually uses collaborative filtering to recommend products to users. In this method, the prediction of user interest is based on the analysis of the tastes and preferences of other users in the system, and it implicitly infer a "similarity" relationship between the two. The underlying assumption is that when two people have similar tastes, they will have a higher probability of maintaining the same attitude towards the product.

For example, the existing recommendation system generally treats different products as independent individuals, and extracts and establishes an implicit relationship network between users and users, products and products through the users' ratings of different products (or corresponding similar) information, or considers the locations of the users, the time information of the users' ratings, etc.

However, in actual disclosure scenarios, in addition to the users' rating (or similar) records of the product, a large amount of other information can also be obtained, especially information about the attributes of the product. Taking the movie recommendation as an example, the recommended target product is a movie. In addition to records of different user ratings, each movie has its own attributes, such as style, director, actors, language, region, shooting time, award status, etc. When a user chooses to watch a movie, they often choose based on these attributes. The choice of different attributes also reflects the types of users. For example, users of the star-chaser group will attach great importance to the actor attribute of the movie, while fans of new films pay more attention to the shooting time of the movie.

The recommendation method of simply using the users' ratings of different products to get the implicit relationship network has a certain effect. However, it is undoubtedly a waste of information to ignore the difference in the inherent attributes of the product itself and not consider the user's reference to the display attributes of the product. On the contrary, effective reference to this information combined with the excellent ability of the collaborative filtering method itself is bound to strengthen the accuracy of the recommended method.

### SUMMARY

### Technical Issues

The main purpose of the present disclosure is to provide a product recommendation method, a product recommendation system and readable storage medium, aiming to improve the accuracy of product recommendation and improve the users' experiences.

### Technical Solutions

The present disclosure provides a product recommendation method, the method includes the following steps:
obtaining a score of a first attribute content of a first attribute of a plurality of products according to historical scores of a plurality of users for the plurality of products in a same type;
obtaining a second attribute of a prediction product and a second attribute content of the second attribute, and obtaining a prediction score of the second attribute of the prediction product gained from the users according to the score of the first attribute content and the second attribute content;
identifying the historical scores of the plurality of products of the same type from the plurality of users as an input of a collaborative wave-filtering system, and obtaining a collaboratively prediction score of the prediction product;
identifying the score of the first attribute content and the historical scores as inputs of a deep neural network model, and obtaining a prediction score ratio of the second attribute and a collaborative prediction score ratio, and;
calculating scores of the prediction product corresponding to the plurality of the users according to the prediction score of the second attribute, the prediction score ratio of the second attribute, the collaborative prediction score and the collaborative prediction score ratio; recommending a prediction product to the user according to scores of prediction products.

In addition, in order to achieve the above purpose, the present disclosure also provides a product recommendation system, the system includes:
a storage, a processor and a product recommendation program that is stored in the storage and can be performed by the processor, when the product recommendation program is performed by the processor, the steps of the product recommendation method above are realized.

In addition, in order to achieve the above purpose, the present disclosure also provides a storage medium, a product recommendation program is stored in the storage medium, when the product recommendation program is executed by the processor, the steps of a product recommendation method as described above are realized.

### Beneficial Effects

According to the embodiment of the disclosure, the scores of the first attribute contents are obtained by scoring a plurality of products in the same type. The attributes of the product are introduced into a recommendation method. The score of each second attribute in the prediction product is calculated according to the scores of the first attributes, the ratio of each second attribute in the product is obtained through the deep neural network model, the score of the prediction product is calculated through the score of the second attribute and the score ratio of the second attribute, the product recommendation is realized according to the product attribute information based on the product score, the accuracy of the product recommendation method is improved, and the user experience is also improved.

### BRIEF DESCRIPTION OF THE DRAWINGS

FIG. 1 is a schematic diagram of a terminal structure of a hardware operating environment according to an embodiment of the present disclosure;
FIG. 2 is a flowchart diagram of a first embodiment of a product recommendation method according to the present disclosure;
FIG. 3 is a flowchart diagram of a second embodiment of the product recommendation method according to the present disclosure;
FIG. 4 is a flowchart diagram of a third embodiment of the product recommendation method according to the present disclosure;
FIG. 5 is a flowchart diagram of a fourth embodiment of the product recommendation method according to the present disclosure;
FIG. 6 is a flowchart diagram of a fifth embodiment of the product recommendation method according to the present disclosure;
FIG. 7 is a flowchart diagram of a sixth embodiment of the product recommendation method according to the present disclosure;
FIG. 8 is a flowchart diagram of a seventh embodiment of the product recommendation method according to the present disclosure; and
FIG. 9 is a flowchart diagram of an eighth embodiment of the product recommendation method according to the present disclosure.
The implementation, the function features and the advantages of the present disclosure will be further explained with reference to the accompanying drawings.

### DETAILED DESCRIPTION OF THE EMBODIMENTS

It should be understood that the specific embodiments described here are merely used to explain the present disclosure and are not intended to limit the present disclosure. According to the main solution of the embodiment of the present disclosure, product attribute information is extracted, product recommendation is realized by considering product attribute information on the basis of the users' scorings of the product, the accuracy of the product recommendation method is improved, and the user experience is improved.

According to the existing product recommendation method, it simply extracts score (or the correspondingly similar) information of different products and establishes a user-and-user, product-and-product hidden relationship network to recommend products. For example, after obtaining a user-to-product score, a user-product matrix is established. A row of the matrix represents a user, a column of the matrix represents a product, an element of the matrix represents the score (or the correspondingly similar) information of the product given by the user. Further, when there is no scoring (or the correspondingly similar) action on the product by the user, marking the element of the matrix as 0 (zero element), therefore the user-to-product matrix is usually an extremely sparse matrix. The mission of a recommendation system based on a collectively wave-filtering method is to accomplish a filling of the zero element position of the matrix. A filling principle comes from the user-user, product-product hidden relationship displayed by the non-zero element of the matrix. Therefore, an output prediction matrix of the entire recommendation system, is a matrix with a same size of the original user-product matrix. Each element of the predicted matrix shows a predicted and estimated degree of likes and dislikes of the product by the user. This product recommendation method fails to comprehensively consider product attributes for optimizing an accuracy of the recommendation method.

The present disclosure through a score of a first attribute content of a plurality of products in a same type, introduces product attributes in a recommendation method, calculates a score of a second attribute of a prediction product according to the score of the first attribute, identifies historical scores of the plurality of products of the same type by a plurality of users as an input of a collaboratively wave-filtering system, obtains a collaborative prediction score of the prediction product. Further, through a deep neutral network model, it obtains a score ratio of the second attribute of the product and a collaborative prediction score ratio. Based on the prediction score of the second attribute, prediction score ratio of the second attribute, the collaborative prediction score and the collaborative prediction score ratio, it calculates a score of the prediction product corresponding to the plurality of users. Then based on scores of the products, it executes a product recommendation. Based on the scores from the users, the product attribute information is considered to realize the product recommendation, which not only increases an accuracy of the product recommendation method, but also optimizes the user experience.

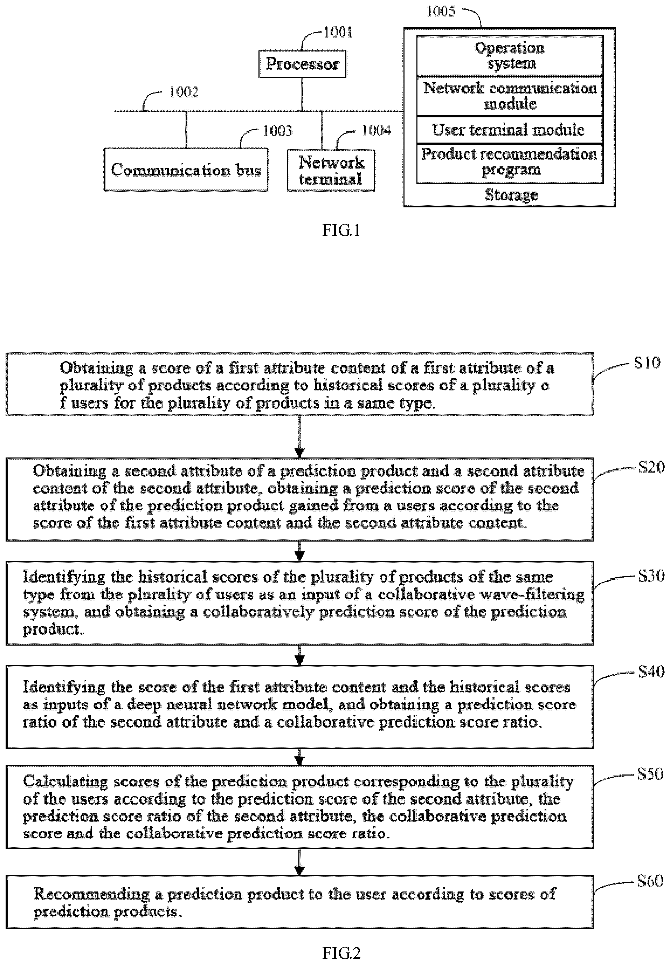

As shown in FIG. 1, FIG. 1 is an example embodiment of the present disclosure relates to hardware schematic structural diagram of a hardware operating environment.

The terminal of the embodiments of the disclosure can be a PC, a smart phone, a tablet computer, a MP 4 (moving picture experts group audio layer IV, a dynamic image expert compression standard audio layer-3) player, a portable computer, or the like mobile terminal device with a display function.

As shown in FIG. 1, the terminal can include: a processor 1001, e.g., a CPU, a network interface 1004, a user interface 1003, a storage 1005, a communications bus 1002 where the communication bus 1002 is configured to realize communication and connection between these components. The user interface 1003 can include a display screen (display), an input unit such as a keyboard, the user interface 1003 can also optionally include a standard wired interface, a wireless interface. The network interface 1004 can optionally include a standard wired interface, a wireless interface (e.g., a WI-FI interface). The storage 1005 can be a high-speed RAM storage, a non-volatile storage, for example a disk storage. The storage 1005 can alternatively be dependent from the aforementioned processor 1001.

Optionally, the terminal can also include a camera, a RF (radio frequency) circuit, a sensor, an audio circuit, a WIFI module, etc. In particular, the sensor can be such as an optical sensor, a motion sensor, or another sensor. Specifically, the optical sensor can include an ambient light sensor and a proximity sensor, in particular, the ambient light sensor adjusts the brightness of the display screen according to the ambient light brightness, the proximity sensor can close the display screen and/or the back light when the mobile terminal moves to the ear. As a motion sensor, a gravity acceleration sensor can detect accelerations in various directions (generally in three-axis), and detect the magnitude and the direction of the gravity when at rest, and can be set to identify the mobile terminal posture applications (such as transverse-and-vertical screen switching, related game, a magnetometer posture calibration), vibration identification related functions (such as a pedometer, tap) and the like. Of course, the mobile terminal can be also configured with a gyroscope, a barometer, a hygrometer, a thermometer, an infrared sensor and other sensors, and will not be described here.

Understood by those in the art, a terminal structure in FIG.1 is not limiting the terminal, which may include more or fewer components, or a combination of certain components, or a different arrangement of components.

As shown in FIG.1, as a computer storage medium, the storage 1005 can include an operation system, a network communication module, a user terminal module, a user terminal module and a product recommendation program.

In the terminal in FIG.1, the network terminal 1004 is mainly configured to connect a back-end server, and transmit data with the back-end server. The user terminal 1003 is mainly configured to connect a client terminal (a user terminal), and transmit data with the client terminal. The processor 1001 can be configured to call a product recommendation program stored in the storage 1005, and perform the following steps:

Step S10: obtaining a score of a first attribute content of a first attribute of a plurality of products according to historical scores of a plurality of users for the plurality of products in a same type;

Step S20: obtaining a second attribute of a prediction product and a second attribute content of the second attribute, obtaining a prediction score of the second attribute of the prediction product gained from a user according to the score of the first attribute content and the second attribute content;

Step S30: identifying the historical scores of the plurality of products of the same type from the plurality of users as an input of a collaborative wave-filtering system, and obtaining a collaboratively prediction score of the prediction product;

Step S40: identifying the score of the first attribute content and the historical scores as inputs of a deep neural network model, and obtaining a prediction score ratio of the second attribute and a collaborative prediction score ratio;

Step S50: calculating scores of the prediction product corresponding to the plurality of the users according to the prediction score of the second attribute, the prediction score ratio of the second attribute, the collaborative prediction score and the collaborative prediction score ratio; and

Step S60: recommending a prediction product to the user according to scores of prediction products.

The method realized when the product recommendation program stored in the memory 1005 is executed by the processor 1001 can refer to each embodiment of a product recommendation method of this disclosure, and will not be repeated here.

Based on the above hardware structure, method embodiments of this disclosure are provided.

Referring to FIG. 2, FIG. 2 is a flowchart of a first embodiment of the method of the present disclosure. The method includes the following steps:

Step S10, obtaining a score of a first attribute content of a first attribute of a plurality of products according to historical scores of a plurality of users for the plurality of products in a same type.

Historical scores of a plurality of products of a same type by users are obtained, the products have a first attribute and a first attribute content of the first attribute, for instance, when the product is a movie, the plurality of products of the same type are namely a plurality of movies, scores of the plurality of movies. The movie has the first attributes like genre, a director, an actor, a language, a region, a time of shot, a winning condition and the like with also the first attribute content of the first attribute, for instance, the genre (the first attribute) consists the first attribute contents like a documentary genre, a mixed genre and a co-occurrence genre; the director (the first attribute) consists the first attribute contents like an A director, a B director and a C director; the actor (the first attribute) consists the first attribute contents like an A actor, a B actor, a C actor and the like, or when the product is a cloth, the cloth has the first attributes like a color, a style, a size, a brand and the like with also the first attribute content of the first attribute, for instance, the color (the first attribute) consists the first attribute contents like a white color, a black color, a blue color and the like; the style (the first attribute) consists the first attribute contents like an elegant style, a printing style, a fashion style, an evening dress style, a casual style and the like; the brand (the first attribute) consists the first attribute contents like an A brand, a B brand, a C brand and the like. The skilled in the art should understand that the embodiments here are only for illustration and not a limitation for the present disclosure.

It could be understood that, according to a plurality of historical scores of the products of the same type by the users, obtaining the score of the first attribute contents by the users, for instance:

the historical score of movie A given by user A is 3, the historical score of movie B given by user B is 4;

the historical score of movie A given by user B is 4, the historical score of movie B given by user B is 5;

the first attribute (director) of movie A is A director, the first attribute (actors) of movie A is actor A and actor B;

the first attribute (director) of movie B is B director, the first attribute (actors) of movie B is actor A and actor C;

then it obtains that the score of director A given by user A is 3, the score of director B given by user A is 4,

and the score of director A given by user B is 4, the score of director B given by user B is 5,

it obtains the score of actor A given by user A is 3.5 or 7, the score of actor B given by user A is 4, the score of actor C given by user A is 4;

it obtains the score of actor A given by user B is 4.5 or 9, the score of actor B given by user A is 4, the score of actor C given by user A is 5;

it could be understood that, in order to facilitate a product recommendation system to operate, a user-attribute content matrix can be respectively established according to the scores of the users for the first attribute content. With the above example, it can establish a user-director content matrix according to the score of the director content, and establish a user-actor content matrix according to the score of the actor content, thereby obtaining a score of the user on the director content and the actor content, that is, the score of the first attribute content, and it can respectively establish a matrix of the user-first attribute content according to the score of the first attribute content. It should be understood by those skilled in the art that the present disclosure is intended to be illustrative only and should not be construed as limiting the present disclosure.

Step S20, obtaining a second attribute of a prediction product and a second attribute content of the second attribute, and obtaining a prediction score of the second attribute of the prediction product gained from a user according to the score of the first attribute content and the second attribute content.

It obtains a second attribute of a prediction product and a second attribute content of the second attribute, and obtains a score of the second attribute of the prediction product according to the score of the first attribute content and the second attribute content.

For example, the director of movie C is director A, the actor of movie C is actor B, and actor C, and the score of movie C is to be predicted.

Then the second attribute director of the product movie C and the second attribute content of the second attribute director are predicted to be director B, and the second attribute actor of the prediction product movie C and the second attribute content of the second attribute actor are predicted to be actor B and actor C;

Then, according to the score of the first attribute content, with the above example, the scores of director B (the second attribute content) from users A and B are respectively 4, and 5. If the second attribute (director) of the prediction product (movie C) has only one second attribute content (director B), the scores of the director of the movie C by users A and B are respectively 4 and 5.

When there are a plurality (two) of second attribute content (actor B, actor C) of the second attribute (actor) in the prediction product (movie C);

the score of actor B given by user A is 3, and the score of actor C given by user A is 4, then it obtains the score of the second attribute (actor) of the prediction product (movie C) given by user A is 4 (the maximum value method is identified to obtain the score of the second attribute) or 3.5 (the averaging method is identified to obtain the score of the second attribute).

The score of actor B given by user B is 4, the score of actor C given by user B is 5, then the score of the second attribute (actor) of the prediction product (movie C) given by the user B is 5 (the maximum value method is identified to obtain the score of the second attribute) or 4.5 (the averaging method is identified to obtain the score of the second attribute).

In an embodiment, a prediction product includes a product that is not scored by a user and a product having a history score, and it re-predicts a score for a product that has already been scored based on a score of the obtained first attribute content.

Two attribute matrixes which includes a matrix [4 5] of the user-director and a matrix [4 5] or [3.5 4.5] of the user-actor attribute can be established for a calculation in the next step. It should be understood by those skilled in the art that the present disclosure is intended to be illustrative only and should not be construed as limiting the present disclosure.

Step S30, identifying the historical scores of the plurality of products of the same type from the plurality of users as an input of a collaborative wave-filtering system, and obtaining a collaboratively prediction score of the prediction product.

It is to be understood that, the users' historical scores for the plurality of products in the same type are input in a collaborative wave-filtering system, a collaborative prediction score for the prediction product is obtained. The prediction score of the attribute of the prediction product itself is obtained. The prediction product includes a product that is not scored by the user and a product having a historical score. The collaborative wave-filtering system obtains the collaborative prediction score of the prediction product according to a hidden relationship between the plurality of products input with the historical scores and the unscored product, and the relationship between the users and the user. For the product with the historical score, the score of the product with the historical score is re-predicted according to the relationship between the users and the user, and the hidden relationship between the plurality of products with the historical scores and the unscored product. The collaborative prediction score displays a degree of the user's attitude to the product that is predicted and estimated by the collaborative wave-filtering system prediction.

Step S40, identifying the score of the first attribute content and the historical scores as inputs of a deep neural network model, and obtaining a prediction score ratio of the second attribute and a collaborative prediction score ratio.

It is to be understood that, for example, a score of a first attribute content (with the above example, the actor A, actor B, actor C, director A, director B), and scores of a movie A, a movie B are input to a deep neural network model, a score ratio of the second attribute such as the director, the actors, and the like, and a collaborative prediction score (local attribute score) ratio are obtained. The network structure of the deep neural network model (the depth of the network, the number of neurons used per layer) can be adjusted according to the structure of the actual data.

Step S50, calculating scores of the prediction product corresponding to the plurality of the users according to the prediction score of the second attribute, the prediction score ratio of the second attribute, the collaborative prediction score and the collaborative prediction score ratio.

The prediction score of each second attribute multiplied by the prediction score ratio of each second attribute plus the collaborative prediction score multiplied by the collaborative prediction score ratio to obtain the score of the prediction product. For example, assuming that the ratio of the director obtained through the deep neural network model is 30%, the ratio of the actor is 50%, the collaborative prediction score ratio is 20%, with the above example, the score of the actor of the prediction product (movie C) by the user is [4 5], the score of the director of the prediction product (movie C) by the user is [4 5], the collaborative prediction score of the prediction product (movie C) by the user is [3 5], then the score of the Movie C by the user is [4 5]^{∗}50%+[4 5]^{∗}30%+[3 5]^{∗}20%=[3.8 5]. It can also be understood as a matrix [User A scores movie C as: actor attribute score^{∗}50% + director attribute score^{∗}30% + collaborative prediction score^{∗}20%; user B scores movie C as: actor attribute score^{∗}50% + director attribute score^{∗}30% + collaborative prediction score^{∗}20%]. It is assumed that the score of the user on the prediction product movie D is [3 6], obtaining a final prediction matrix.

In an embodiment, scores of the prediction product corresponding to the plurality of users can also be calculated according to a prediction score of each second attribute of the product and a weighted average of the collaborative prediction score.

Step S60, recommending a prediction product to the user according to scores of prediction products.

A recommendation of the product is carried out for the user through the scores of the prediction matrix. With the above example, the recommendation is given to user A according to the prediction scores of the movie A, the movie B, the movie C and the movie D by the user A. the recommendation is given to user B according to the prediction scores of the movie A, the movie B, the movie C and the movie D by the user B. Or, a movie in a preset score value range is recommended to the user A and B.

Through scores of a plurality of products of a same type, a score of the first attribute content is obtained, and product attributes are introduced into the recommendation method, and then according to the score of the first attribute, scores of second attributes of a prediction product is calculated. The prediction product includes a product which is not scored by the users and a product with a historical score. Through the deep neutral network model, a score ratio of each second attribute and a collaborative prediction score ratio of the prediction product are obtained. Through the score of each second attribute, the score ratio of each second attribute, the collaborative prediction score, the collaborative prediction score ratio, the scores of the prediction products are calculated. Further, the product recommendation is carried out according to the scores of the prediction products. The product recommendation is realized by considering the product attribute information based on the user's scoring of the products. The method not only improves the accuracy of the product recommendation method, but also improves the user experience.

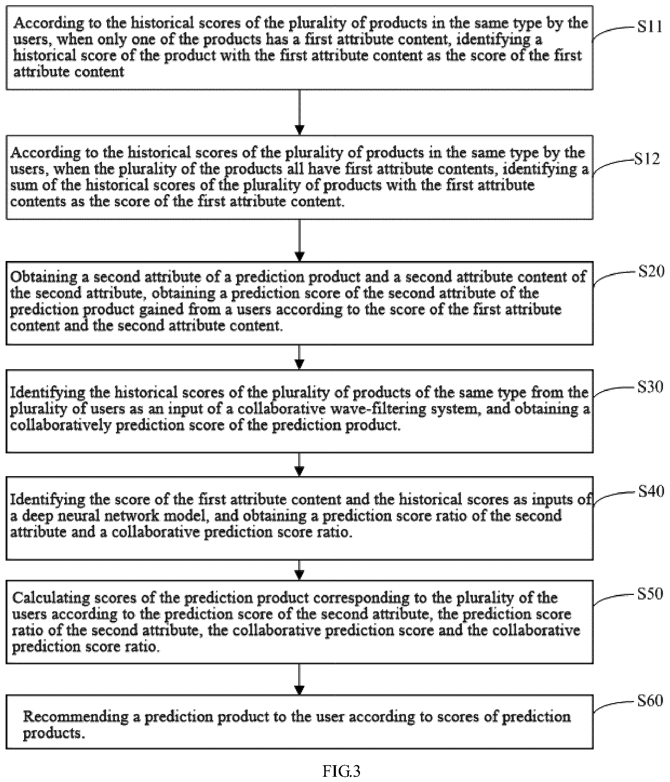

Further, referring to FIG. 3, FIG. 3 is a flowchart diagram of a second embodiment of the product recommendation method of the present disclosure. Based on the embodiment shown in FIG. 2, the step S10 can include:

Step S 11, according to the historical scores of the plurality of products in the same type by the users, when only one of the products has a first attribute content, identifying a historical score of the product with the first attribute content as the score of the first attribute content;

Step S12, according to the historical scores of the plurality of products in the same type by the users, when the plurality of the products all have first attribute contents, identifying a sum of the historical scores of the plurality of products with the first attribute contents as the score of the first attribute content.

It can be understood that when only one product has a first attribute content, the historical score of the product with the first attribute content can be identified as the score of the first attribute content; and when the plurality of products have first attribute contents, the sum of the historical scores of the plurality of products with the first attribute contents is identified as the score of the first attribute content.

For example, the historical score of movie A given by user A is 3, the historical score of movie B given by user A is 4.

The first attribute (director) of movie A is director A, the first attributes (actors) of movie A are actor A, and actor B.

The first attribute (director) of movie B is director B, the first attributes (actors) of movie B are actor A, and actor C.

Then the score of director A given by user A is 3, the score of the director B given by user A is 4.

The score of actor A given by user A is (3+4)=7, the score of actor B given by user A is 3, the score of actor C given by user A is 4.

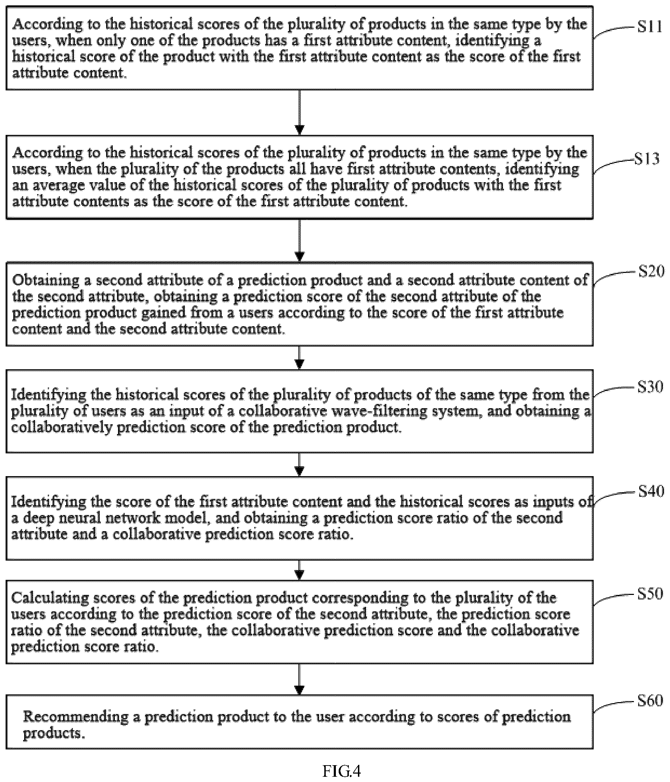

Further, referring to FIG. 4, FIG. 4 is a flowchart diagram of a third embodiment of the product recommendation method of the present disclosure. Based on the above embodiment, the step S10 can include:

Step S11, according to the historical scores of the plurality of products in the same type by the users, when only one of the products has a first attribute content, identifying a historical score of the product with the first attribute content as the score of the first attribute content;

Step S13, according to the historical scores of the plurality of products in the same type by the users, when the plurality of the products all have first attribute contents, identifying an average value of the historical scores of the plurality of products with the first attribute contents as the score of the first attribute content.

It can be understood that when only one product has a first attribute content, the historical score of the product with the first attribute content can be identified as the score of the first attribute content; and when the plurality of products have first attribute contents, the average value of the historical scores of the plurality of products with the first attribute contents is identified as the score of the first attribute content.

For example, the historical score of movie A given by user A is 3, the historical score of movie B given by user A is 4.

The first attribute (director) of movie A is director A, the first attributes (actors) of movie A are actor A, and actor B.

The first attribute (director) of movie B is director B, the first attributes (actors) of movie B are actor A, and actor C.

Then the score of director A given by user A is 3, the score of the director B given by user A is 4.

The score of actor A given by user A is (3+4)/2=3.5, the score of actor B given by user A is 3, the score of actor C given by user A is 4.

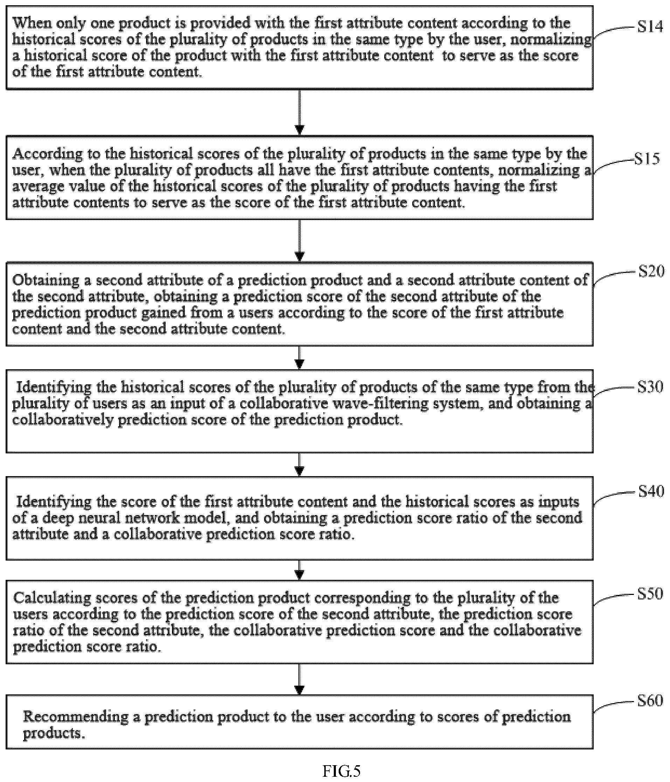

Further, referring to FIG. 5, FIG. 5 is a flowchart diagram of a fourth embodiment of the product recommendation method according to the present disclosure. Based on the above embodiments, step S10 may include:

Step S14, identifying a historical score of the product with the first attribute content as a score of the first attribute content according to the historical scores of the plurality of products of the same type from the plurality of users, when only one of the products has the first attribute content;

Step S15, identifying a sum of the historical scores of the plurality of products with the first attribute content as the score of the first attribute content according to the historical score of the plurality of products of the same type from the plurality of users, when the plurality of products all have the first attribute content.

It could be understood that when only one product has a first attribute content, the historical score of the product having the first attribute content may be normalized based on the highest score made by the user to save as a score for the first attribute content. When the plurality of products are provided with the first attribute contents, an average value of the historical scores of the plurality of products having the first attribute contents is subjected to a normalization processing based on the highest score made by the user to serve as the score of the first attribute content.

For example, the historical score of movie A by the user A is 3, and the historical score of movie B by user A is 4.

The first attribute (director) of movie A is director A, and the first attribute (actors) of movie A are actor A and actor B.

The first attribute (director) of movie B is director B, and the first attribute (actors) of movie B is actor A and actor C.

Then, the score of director A by user A is 3/4, and the score of director B by the user A is 4/4=1.

The score of actor A by user A is (3+4)/2/4=0.875, the score of actor B by the user A is 3/4, and the score of actor C by user A is 4/4 =1.

In an embodiment, the score of the first attribute content is not limited to be obtained by taking the maximum value method, the average value method and the normalization processing method in the embodiments, and the score of the first attribute content can also be obtained by other methods such as a minimum value method, a weighted average value method and a random sampling method, etc.

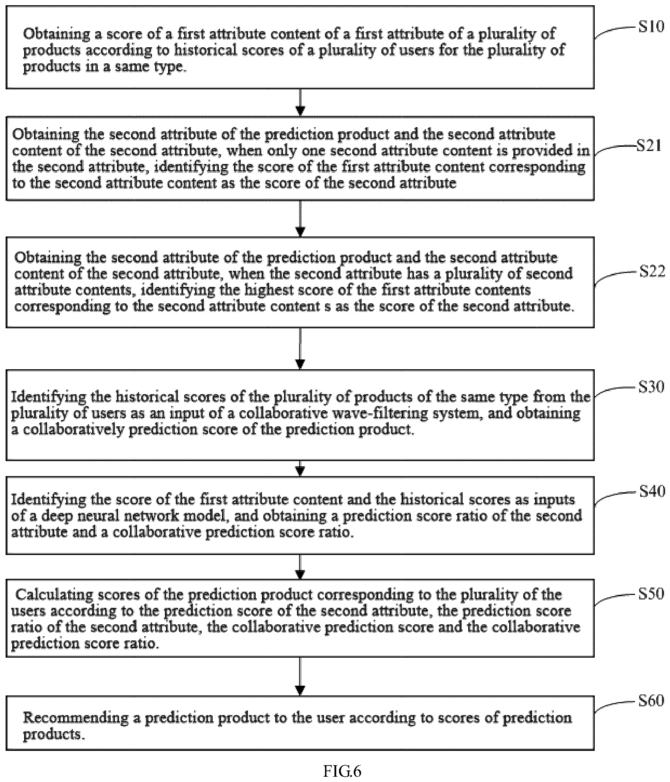

Further, referring to FIG. 6, FIG. 6 is a flowchart diagram of a fifth embodiment of the product recommendation method according to the present disclosure. Based on the above embodiments, Step S20 may include:

Step S21, obtaining the second attribute of the prediction product and the second attribute content of the second attribute, when only one second attribute content is provided in the second attribute, identifying the score of the first attribute content corresponding to the second attribute content as a score of the second attribute;

Step S22, obtaining the second attribute of the prediction product and the second attribute content of the second attribute, when the second attribute has a plurality of second attribute contents, identifying the highest score of the first attribute contents corresponding to the second attribute contents as the score of the second attribute.

When only one second attribute content is provided in the second attribute, the score of the first attribute content corresponding to the second attribute content is identified as the score of the second attribute; and when the second attribute has a plurality of second attribute contents, the highest score of the first attribute content corresponding to the second attribute contents is identified as the score of the second attribute.

For example, a second attribute (director) of a prediction product (movie C) and a second attribute content (director B) of director are obtained, and another second attribute (actor) of the prediction product (movie C) and second attribute contents (Actor B, Actor C) of actor are obtained;

then, according to the score of the first attribute content, the scores of director B (the second attribute content) by user A and B are respectively 4, and 5, and the second attribute (director) in the prediction product (movie C) has only one second attribute content (director B), and the scores of the directors by the users A and B on the movie C are respectively 4 and 5.

When a second attribute (actor) in a prediction product (movie C) has a plurality (two) of second attribute contents (actor B, actor C),

user A scores actor B to be 3, and user A scores actor C to be 4; and then the score of the second attribute (actor) of the prediction product (movie C) by user A is obtained to be 4.

User B scores actor B to be 4, and user B scores actor C to be 5, so that the score of user B on the second attribute (actor) of the predicted product (movie C) is 5.

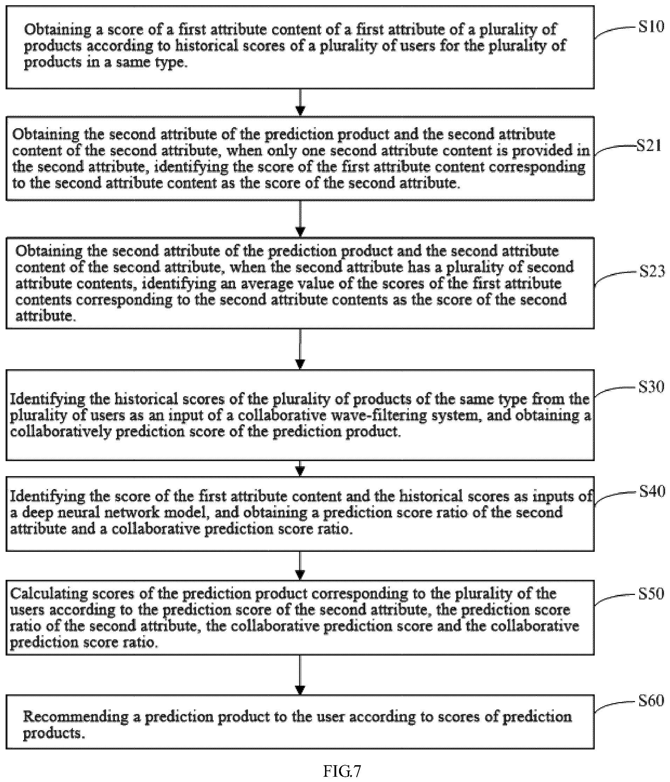

Further, referring to FIG. 7, FIG. 7 is a flowchart diagram of a sixth embodiment of the product recommendation method according to the present disclosure. Based on the above embodiments, the Step S20 may include:

Step S21, obtaining the second attribute of the prediction product and the second attribute content of the second attribute, when only one second attribute content is provided in the second attribute, identifying the score of the first attribute content corresponding to the second attribute content as a score of the second attribute.

Step S23, obtaining the second attribute of the prediction product and the second attribute content of the second attribute, when the second attribute has a plurality of second attribute contents, identifying an average value of scores of first attribute contents corresponding to the second attribute contents as the score of the second attribute.

When there is only one second attribute content in the second attribute, the score of the first attribute content corresponding to the second attribute content is identified as the score of the second attribute, or when there are a plurality of second attribute contents in the second attribute, an average value of the scores of the first attribute contents corresponding to the second attribute contents is identified as the score of the second attribute.

For example, a second attribute (director) of a prediction product (movie C) and a second attribute content (director B) of director are obtained, another second attribute (actor) of the prediction product (movie C) and second attribute contents (actor B, actor C) of actor are obtained;

then, according to the scores of the first attribute contents, the scores of director B (the second attribute content) by users A and B are respectively 4, and 5. When the second attribute (director) of the prediction product (movie C) has only one second attribute content (director B), and the scores of the director of the users A and B on movie C are respectively 4 and 5.

When a second attribute (actor) in a prediction product (movie C) has a plurality (two) of second attribute contents (actor B, actor C), user A scores the actor B to be 3, and user A scores actor C to be 4; the score of the second attribute (actor) of the prediction product (movie C) by user A is obtained as (3+4)/2=3.5.

User B scores actor B to be 4, and user B scores actor C to be 5, so that the score of the second attribute (actor) of user B on the prediction product (movie C) is obtained as (4+5)/2= 4.5.

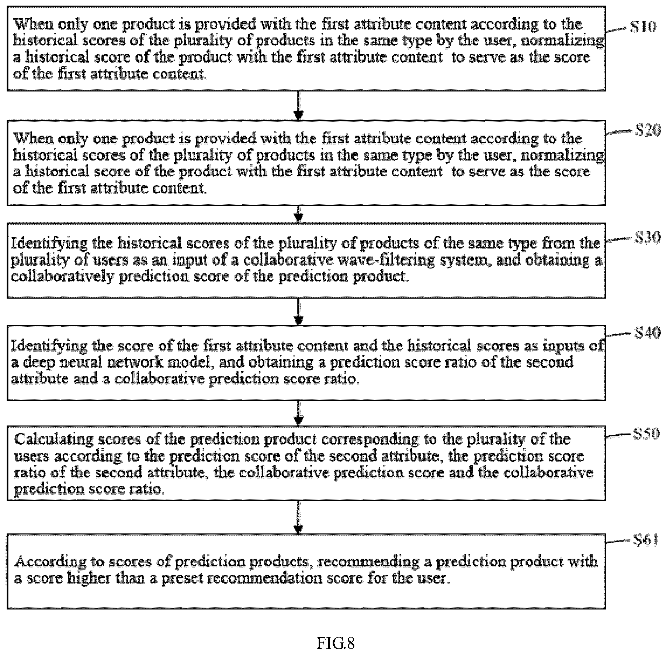

Further, referring to FIG. 8, FIG. 8 is a flowchart diagram of a seventh embodiment of the product recommendation method according to the present disclosure. Based on the above embodiments, step S60 can include:

Step 61, recommending a prediction product with a score higher than a preset recommendation score for the user according to scores of prediction products.

A recommendation score value is preset, and when the score of a prediction product is greater than the preset recommendation score value, recommendation is carried out. Assuming that the preset recommendation score value is 2, and there are 50 prediction products that are scored by user A to have a score higher than 2, then the 50 products are recommended to the user A. There are 30 prediction products that are scored by user B to have a score higher than 2, then the 30 products are recommended to user B.

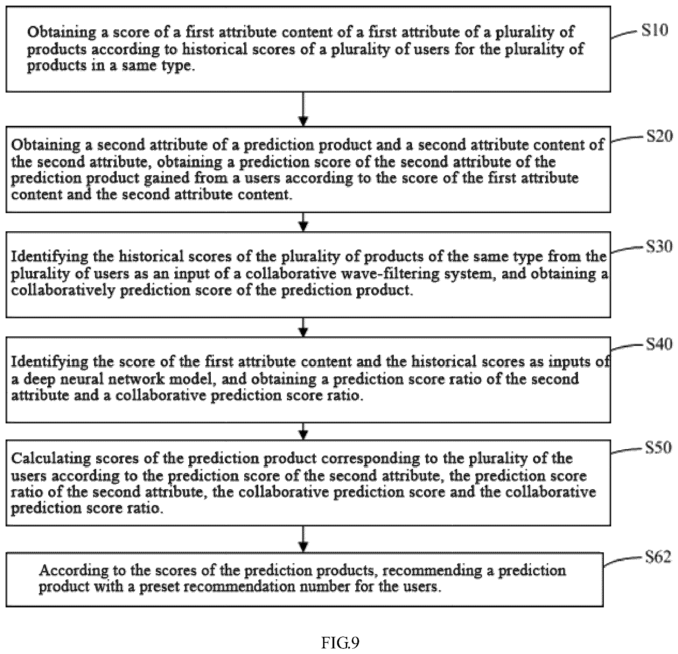

Further, referring to FIG. 9, FIG. 9 is a flowchart diagram of an eighth embodiment of the product recommendation method according to the present disclosure. Based on the above embodiments, step S60 can include:

Step S62, recommending a prediction product with a preset recommendation number for the users according to the scores of the prediction products.

A recommendation number is preset. According to the preset recommendation number, the preset number prediction products are recommended according to the scores of the prediction products, assuming that the preset recommendation number is 20, the first 20 products are identified to be recommended to the user A according to the prediction scores that user A scores the prediction products.

The disclosure further provides a product recommendation system.

The product recommendation system includes: a storage, a processor and a product recommendation program stored on the storage and executable on the processor, in particular, the product recommendation program is executed by the processor to implement the steps of the product recommendation method as described above.

In particular, when the product recommendation program is performed on the processor, the method that is realized can refer to various embodiments of the product recommendation method of the present disclosure, and will not be further described here.

The disclosure also provides a storage medium.

A product recommendation program is stored on the storage medium, and the product recommendation program is executed by the processor to implement the steps of the product recommendation method as described above.

The method that is implemented when the product recommendation program is performed on the processor can refer to various embodiments of the product recommendation method of the present disclosure, and will not be further described here.

The present disclosure is only a preferred embodiment of the present disclosure, and is not intended to limit the scope of the present disclosure. Any equivalent structure or equivalent process transformation as those used in the description and the drawings of the present disclosure or directly or indirectly applications to other related technical fields, are all included in the patent protection scope of the present disclosure.

## Claims

1. A product recommendation method, comprising the following steps:
obtaining a score of a first attribute content of a first attribute of a plurality of products according to historical scores of a plurality of users for the plurality of products in a same type;
obtaining a second attribute of a prediction product and a second attribute content of the second attribute, and obtaining a prediction score of the second attribute of the prediction product gained from a user according to the score of the first attribute content and the second attribute content;
identifying the historical scores of the plurality of products of the same type from the plurality of users as an input of a collaborative wave-filtering system, and obtaining a collaboratively prediction score of the prediction product;
identifying the score of the first attribute content and the historical scores as inputs of a deep neural network model, and obtaining a prediction score ratio of the second attribute and a collaborative prediction score ratio;
calculating scores of the prediction product corresponding to the plurality of the users according to the prediction score of the second attribute, the prediction score ratio of the second attribute, the collaborative prediction score and the collaborative prediction score ratio; and
recommending a prediction product to the user according to scores of prediction products.

2. The product recommendation method of claim 1, wherein the step of obtaining a score of a first attribute content of a first attribute of a plurality of products according to historical scores of a plurality of users for the plurality of products in a same type comprises:
identifying a historical score of the product with the first attribute content as a score of the first attribute content according to the historical scores of the plurality of products of the same type from the plurality of users, when only one of the products has the first attribute content; and
identifying a sum of the historical scores of the plurality of products with the first attribute content as the score of the first attribute content according to the historical score of the plurality of products of the same type from the plurality of users, when the plurality of products all have the first attribute content.

3. The product recommendation method of claim 1, wherein, the step of obtaining a score of a first attribute content of a first attribute of a plurality of products according to historical scores of a plurality of users for the plurality of products in a same type comprises:
identifying a historical score of the product with the first attribute content as a score of the first attribute content according to the historical scores of the plurality of products of the same type from the plurality of users, when only one of the products has the first attribute content; and
identifying a sum of the historical scores of the plurality of products with the first attribute content as the score of the first attribute content according to the historical score of the plurality of products of the same type from the plurality of users, when the plurality of products all have the first attribute content.

4. The product recommendation method of claim 1, wherein the step of obtaining a score of a first attribute content of a first attribute of a plurality of products according to historical scores of a plurality of users for the plurality of products in a same type comprises:
identifying a historical score of the product with the first attribute content as a score of the first attribute content according to the historical scores of the plurality of products of the same type from the plurality of users, when only one of the products has the first attribute content; and
identifying a sum of the historical scores of the plurality of products with the first attribute content as the score of the first attribute content according to the historical score of the plurality of products of the same type from the plurality of users, when the plurality of products all have the first attribute content.

5. The product recommendation method of claim 1, wherein the step of obtaining a second attribute of a prediction product and a second attribute content of the second attribute, and obtaining a prediction score of the second attribute of the prediction product gained from a user according to the score of the first attribute content and the second attribute content comprises:
obtaining the second attribute of the prediction product and the second attribute content of the second attribute, when only one second attribute content is provided in the second attribute, identifying the score of the first attribute content corresponding to the second attribute content as a score of the second attribute; and
obtaining the second attribute of the prediction product and the second attribute content in the second attribute, when the second attribute has a plurality of second attribute contents,
identifying the highest score of first attribute contents corresponding to the second attribute contents as the score of the second attribute.

6. The product recommendation method of claim 1, wherein the step of obtaining a second attribute of a prediction product and a second attribute content of the second attribute, and obtaining a prediction score of the second attribute of the prediction product gained from a user according to the score of the first attribute content and the second attribute content comprises:
obtaining the second attribute of the prediction product and the second attribute content of the second attribute, when only one second attribute content is provided in the second attribute, identifying the score of the first attribute content corresponding to the second attribute content as a score of the second attribute, and
obtaining the second attribute of the prediction product and the second attribute content of the second attribute, when the second attribute has a plurality of second attribute contents,
identifying an average value of scores of first attribute contents corresponding to the second attribute contents as the score of the second attribute.

7. The product recommendation method of claim 6, wherein the step of recommending a prediction product to the user according to scores of prediction products comprises:
recommending a prediction product with a preset recommendation number for the users according to the scores of the prediction products.

8. The product recommendation method of claim 6, wherein the step of recommending a prediction product to the user according to scores of prediction products comprises:
recommending a prediction product with a preset recommendation number for the users according to the scores of the prediction products.

9. A product recommendation system, wherein the product recommendation system comprises: a storage, a processor and a product recommendation program that is stored in the storage and can be performed by the processor, when the product recommendation program is performed by the processor, the following steps are realized:
obtaining a score of a first attribute content of a first attribute of a plurality of products according to historical scores of a plurality of users for the plurality of products in a same type;
obtaining a second attribute of a prediction product and a second attribute content of the second attribute, and obtaining a prediction score of the second attribute of the prediction product gained from the users according to the score of the first attribute content and the second attribute content;
identifying the historical scores of the plurality of products of the same type from the plurality of users as an input of a collaborative wave-filtering system, and obtaining a collaboratively prediction score of the prediction product;
identifying the score of the first attribute content and the historical scores as inputs of a deep neural network model, and obtaining a prediction score ratio of the second attribute and a collaborative prediction score ratio;
calculating scores of the prediction product corresponding to the plurality of the users according to the prediction score of the second attribute, the prediction score ratio of the second attribute, the collaborative prediction score and the collaborative prediction score ratio; and
recommending a prediction product to the user according to scores of prediction products.

10. The product recommendation system of claim 9, wherein when the product recommendation program is performed by the processor, the step of obtaining a score of a first attribute content of a first attribute of a plurality of products according to historical scores of a plurality of users for the plurality of products in a same type comprises:
identifying a historical score of the product with the first attribute content as a score of the first attribute content according to the historical scores of the plurality of products of the same type from the plurality of users, when only one of the products has the first attribute content; and
identifying a sum of the historical scores of the plurality of products with the first attribute content as the score of the first attribute content according to the historical score of the plurality of products of the same type from the plurality of users, when the plurality of products all have the first attribute content.

11. The product recommendation system of claim 9, wherein when the product recommendation program is performed by the processor, steps of obtaining a score of a first attribute content of a first attribute of a plurality of products according to historical scores of a plurality of users for the plurality of products in a same type comprises:
identifying a historical score of the product with the first attribute content as a score of the first attribute content according to the historical scores of the plurality of products of the same type from the plurality of users, when only one of the products has the first attribute content; and
identifying a sum of the historical scores of the plurality of products with the first attribute content as the score of the first attribute content according to the historical score of the plurality of products of the same type from the plurality of users, when the plurality of products all have the first attribute content.

12. The product recommendation system of claim 9, wherein when the product recommendation program is performed by the processor, steps of obtaining a score of a first attribute content of a first attribute of a plurality of products according to historical scores of a plurality of users for the plurality of products in a same type comprises:
identifying a historical score of the product with the first attribute content as a score of the first attribute content according to the historical scores of the plurality of products of the same type from the plurality of users, when only one of the products has the first attribute content; and,
identifying a sum of the historical scores of the plurality of products with the first attribute content as the score of the first attribute content according to the historical score of the plurality of products of the same type from the plurality of users, when the plurality of products all have the first attribute content.

13. The product recommendation system of claim 9, wherein when the product recommendation program is performed by the processor, steps of obtaining a second attribute of a prediction product and a second attribute content of the second attribute, and obtaining a prediction score of the second attribute of the prediction product gained from a user according to the score of the first attribute content and the second attribute content comprises:
obtaining the second attribute of the prediction product and the second attribute content of the second attribute, when only one second attribute content is provided in the second attribute, identifying the score of the first attribute content corresponding to the second attribute content as a score of the second attribute, and
obtaining the second attribute of the prediction product and the second attribute content of the second attribute, when the second attribute has a plurality of second attribute contents,
identifying the highest score of first attribute contents corresponding to the second attribute contents as the score of the second attribute.

14. The product recommendation system of claim 9, wherein when the product recommendation program is performed by the processor, steps of obtaining a second attribute of a prediction product and a second attribute content of the second attribute, and obtaining a prediction score of the second attribute of the prediction product gained from a user according to the score of the first attribute content and the second attribute content comprises:
obtaining the second attribute of the prediction product and the second attribute content of the second attribute, when only one second attribute content is provided in the second attribute, identifying the score of the first attribute content corresponding to the second attribute content as a score of the second attribute; and
obtaining the second attribute of the prediction product and the second attribute content of the second attribute, when the second attribute has a plurality of second attribute contents,
identifying an average value of scores of first attribute contents corresponding to the second attribute contents as the score of the second attribute.

15. The product recommendation system of claim 14, wherein when the product recommendation program is performed by the processor, steps of recommending a prediction product to the user according to scores of prediction products comprises:
recommending a prediction product with a preset recommendation number for the users according to the scores of the prediction products.

16. The product recommendation system of claim 14, wherein when the product recommendation program is performed by the processor, steps of recommending a prediction product to the user according to scores of prediction products comprises:
recommending a prediction product with a score higher than a preset recommendation score for the user according to scores of prediction products.

17. A storage medium, wherein a product recommendation program is stored in the storage medium, when the product recommendation program is executed by the processor, the following steps are realized:
obtaining a score of a first attribute content of a first attribute of a plurality of products according to historical scores of a plurality of users for the plurality of products in a same type;
obtaining a second attribute of a prediction product and a second attribute contents of the second attribute, and obtaining a prediction score of the second attribute of the prediction product gained from the users according to the score of the first attribute content and the second attribute content;
identifying the historical scores of the plurality of products of the same type from the plurality of users as an input of a collaborative wave-filtering system, and obtaining a collaboratively prediction score of the prediction product;
identifying the score of the first attribute content and the historical scores as inputs of a deep neural network model, and obtaining a prediction score ratio of the second attribute and a collaborative prediction score ratio; and
calculating scores of the prediction product corresponding to the plurality of the users according to the prediction score of the second attribute, the prediction score ratio of the second attribute, the collaborative prediction score and the collaborative prediction score ratio;
recommending a prediction product to the user according to scores of prediction products.

18. The product recommendation system of claim 17, wherein when the product recommendation program is performed by the processor, steps of obtaining a score of a first attribute content of a first attribute of a plurality of products according to historical scores of a plurality of users for the plurality of products in a same type comprises:
identifying a historical score of the product with the first attribute content as a score of the first attribute content according to the historical scores of the plurality of products of the same type from the plurality of users, when only one of the products has the first attribute content; and
identifying a sum of the historical scores of the plurality of products with the first attribute content as the score of the first attribute content according to the historical score of the plurality of products of the same type from the plurality of users, when the plurality of products all have the first attribute content.

19. The product recommendation system of claim 17, wherein when the product recommendation program is performed by the processor, steps of obtaining a score of a first attribute content of a first attribute of a plurality of products according to historical scores of a plurality of users for the plurality of products in a same type comprises:
identifying a historical score of the product with the first attribute content as a score of the first attribute content according to the historical scores of the plurality of products of the same type from the plurality of users, when only one of the products has the first attribute content; and,
identifying a sum of the historical scores of the plurality of products with the first attribute content as the score of the first attribute content according to the historical score of the plurality of products of the same type from the plurality of users, when the plurality of products all have the first attribute content.

20. The product recommendation system of claim 17, wherein when the product recommendation program is performed by the processor, steps of obtaining a score of a first attribute content of a first attribute of a plurality of products according to historical scores of a plurality of users for the plurality of products in a same type comprises:
identifying a historical score of the product with the first attribute content as a score of the first attribute content according to the historical scores of the plurality of products of the same type from the plurality of users, when only one of the products has the first attribute content; and,
identifying a sum of the historical scores of the plurality of products with the first attribute content as the score of the first attribute content according to the historical score of the plurality of products of the same type from the plurality of users, when the plurality of products all have the first attribute content.
